# EUROPEAN PATENT APPLICATION

(11) **EP 2 947 272 A1**
(43) Date of publication of application: **25.11.2015**
(21) Application number: 15167634.3
(22) Date of filing: 13.05.2015
(51) Int. Cl.: F01D 5/18, F01D 9/04

(54) **GAS TURBINE ENGINE STATOR VANE BAFFLE ARRANGEMENT**

(30) Priority: 22.05.2014 US 201462001939 P
(71) Applicant: United Technologies Corporation, Hartford, CT 06101 (US)
(72) Inventor: GHIGLIOTTY, Jaime G., Cabo Rojo 00623 (PR); DEVORE, Matthew A., Cromwell, CT Connecticut 06416 (US)
(74) Representative: Leckey, David Herbert

(57) **Abstract**

A stator vane (63) for a gas turbine engine includes an airfoil (68) that has an exterior wall (82) that provides a cooling cavity (84). The exterior wall (82) has an interior surface (98) that has multiple pin fins (96) extending therefrom. A baffle (72) is arranged in the cooling cavity (84) and is supported by the pin fins (96).

## Description

### BACKGROUND

This disclosure relates to a gas turbine engine turbine stator vane with a baffle.

A gas turbine engine typically includes a fan section, a compressor section, a combustor section and a turbine section. Air entering the compressor section is compressed and delivered into the combustor section where it is mixed with fuel and ignited to generate a high-speed exhaust gas flow. The high-speed exhaust gas flow expands through the turbine section to drive the compressor and the fan section. The compressor section typically includes low and high pressure compressors, and the turbine section includes low and high pressure turbines.

Some stator vane cooling configurations include a cooling cavity with a baffle arranged within the cavity. The baffle may be constructed from a sheet steel and is supported relative to the exterior wall of the stator vane by radially extending ribs in the exterior wall of the airfoil from the inner platform toward the outer platform.

To enhance cooling within the cooling cavity in the area between the baffle and the exterior wall, trip strips may be provided on the exterior wall. The trip strips increase the turbulence of the cooling fluid to enhance heat transfer.

### SUMMARY

In one exemplary embodiment, a stator vane for a gas turbine engine includes an airfoil that has an exterior wall that provides a cooling cavity. The exterior surface has an interior surface that has multiple pin fins extending therefrom. A baffle is arranged in the cooling cavity and is supported by the pin fins.

In a further embodiment of the above, the baffle is sheet steel.

In a further embodiment of any of the above, the exterior wall provides pressure and suction sides joined at leading and trailing edges. The baffle includes impingement holes that are configured to provide impingement cooling fluid onto the exterior wall at the leading edge.

In a further embodiment of any of the above, the baffle includes a generally smooth outer contour free of protrusions.

In a further embodiment of any of the above, the outer contour is provided by plastically deformation.

In a further embodiment of any of the above, cooling holes are provided by at least one of drilling, laser drilling, or electro discharge machining.

In a further embodiment of any of the above, a perimeter cavity is provided between the baffle and the exterior wall. The pin fins are arranged in the perimeter cavity.

In a further embodiment of any of the above, the perimeter cavity circumscribes the baffle.

In a further embodiment of any of the above, the pin fins provide the sole support for the baffle in the perimeter cavity.

In a further embodiment of any of the above, the pin fins are arranged in rows.

In a further embodiment of any of the above, the pin fins are radially spaced from one another.

In a further embodiment of any of the above, a rib separates the cooling cavity from a trailing edge cooling cavity. The rib includes holes.

In a further embodiment of any of the above, the pin fins are integral with the exterior wall.

In a further embodiment of any of the above, the airfoil is a nickel alloy.

In a further embodiment of any of the above, the pin fins are arranged in a region with a low Reynolds number.

In a further embodiment of the above, the Reynolds number is less than 4000.

In a further embodiment of the above, the Reynolds number is less than 1500.

In a further embodiment of any of the above, the region has a Nusselt number less than 40.

In another exemplary embodiment, an assembly for a gas turbine engine includes an airfoil that has an exterior wall that provides a cooling cavity. The exterior wall has an interior surface that has multiple pin fins that extend therefrom. A baffle is arranged in the cooling cavity and is supported by the pin fins. The pin fins are arranged in a region with a low Reynolds number. A cooling source is in fluid communication with one side of the baffle. A component is in fluid communication with another side of the baffle. Cooling fluid is configured to flow from the cooling source through the baffle to the component.

In a further embodiment of the above, the component is a downstream airfoil.

### BRIEF DESCRIPTION OF THE DRAWINGS

The disclosure can be further understood by reference to the following detailed description when considered in connection with the accompanying drawings wherein:
Figure 1 schematically illustrates a gas turbine engine embodiment.
Figure 2 is a schematic view through an engine section including a fixed stage and a rotating stage.
Figure 3 is a schematic view of a stator vane and associated cooling path.
Figure 4 is a cross-sectional view through an airfoil depicted in Figure 3 taken along line 4-4.
Figure 5 is a cross-sectional view through the airfoil shown in Figure 4 taken along line 5-5.

The embodiments, examples and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

### DETAILED DESCRIPTION

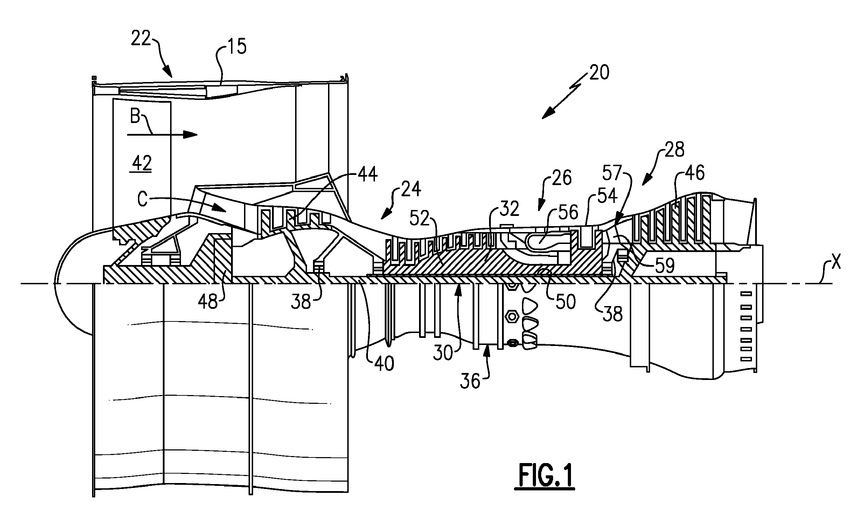

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmenter section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150 ft / second (350.5 meters/second).

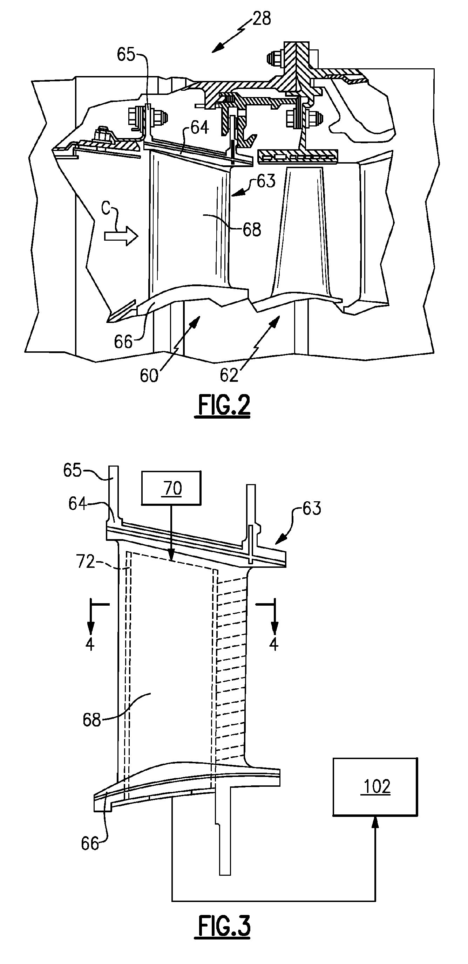

Referring to Figure 2, a portion of an engine section is shown, for example, a turbine section. It should be understood, however, that disclosed section also may be provided in a compressor section.

The section includes a fixed stage 60 that provides a circumferential array of vanes 63 arranged axially adjacent to a rotating stage 62. In the example, the vanes 63 include an outer diameter portion 64 having hooks 65 that support the array of vanes 63 with respect to a case structure. An airfoil 68 extends radially from the outer platform 64 to an inner diameter portion or platform 66. It should be understood that the disclosed vane arrangement could be used for vane structures cantilevered at the inner diameter portion of the airfoil.

Referring to Figure 3, a cooling source 70, such as bleed air from the compressor section, provides a cooling fluid to a baffle 72 arranged within a cooling cavity of the stator vane 63. In the example, the cooling fluid flows into the baffle 72 through the outer platform 64. Cooling fluid exits the baffle 72 through the inner platform 66 and flows to a component 102. In the example, the component is a downstream airfoil.

Since the cooling fluid to the stator vane 63 is used to provide cooling fluid to another component, a very low flow may be provided to the baffle 72, resulting in low Reynolds number. In this disclosure, a low Reynolds number corresponds to laminar or near-laminar flow. In one example, the Reynolds number is less than 4000. In another example, the Reynolds number is less than 1500.

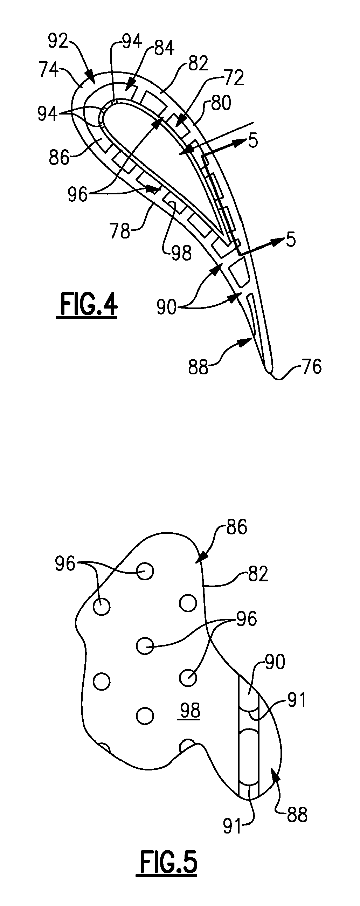

Referring to Figure 4, an exterior wall 82 provides pressure and suction sides 78, 80 that are joined at leading and trailing edges 74, 76. The exterior wall 82 provides a cooling cavity 84 within which the baffle 72 is arranged. A perimeter cavity 86 is provided between the baffle 72 and the exterior wall 82.

One or more radially extending ribs 90 are provided between and connect the pressure and suction sides 78, 80. The ribs 90 separate a trailing edge cooling cavity 88 from the perimeter cavity 86. In one example, holes 91 may be provided in the ribs 90 to provide cooling fluid from the perimeter cavity 86 into the trailing edge cooling cavity 88, as shown in Figure 5. Fluid exits the trailing edge 76 as is known.

An impingement cooling arrangement 92 is provided to cool the leading edge 74. In the example, a portion of the baffle 72 includes impingement cooling holes 94 that provide impingement cooling fluid to an interior or backside of the exterior wall 82 at the leading edge 74.

In one example, the baffle 72 is provided by sheet steel, for example, a single sheet, and includes an outer contour generally free of protrusions. The outer contour is provided by plastic deformation, as opposed to, for example, casting. The cooling holes, such as the impingement cooling holes 94, are provided in the baffle 72 using at least one of drilling, laser drilling, or electro discharge machining.

The exterior wall 82 includes an interior surface 98 from which multiple pin fins extend to a terminal end. The terminal end supports the baffle 72. In one example, the pin fins 96 are arranged in rows and radially spaced from one another, as best shown in Figure 5. If the trips touch the baffle the flow can be blocked. Instead, with pin-fins the flow will go around not affecting the vane coolant flow rate. The pin fins 96 are integrally formed with the exterior wall, which may be formed from a nickel alloy. In one example, the pin fins 96 provide the sole support for the baffle 72 in the perimeter cavity 86.

The perimeter cavity 86 circumscribes the baffle 72. The region provided within the perimeter cavity 86 provides a Nusselt number of less than 40. In one example, the region is free of trip strips.

The disclosed vane and baffle arrangement provides improved convective cooling at very low Reynolds numbers as compared to trip strips. The disclosed configuration replaces trip strips with pin-fins to eliminate heat transfer decay at low Reynolds numbers. With trip strips under laminar flow, heat transfer decay is observed at the beginning of the passage and prior to reach fully developed flow. Moreover, heat transfer decay depends on the passage distance and will result in regions with improper convective cooling. Otherwise, pin-fins heat transfer coefficients are uniform at low Reynolds numbers, eliminating concern of low convective cooling in trip strips prior to reach the fully developed flow.

In addition, the simple design will reduce scrap rate and cost when manufacturing small airfoils. For small applications, too complicated cooling schemes are more prone to scrap due to tight manufacturing tolerances.

It should also be understood that although a particular component arrangement is disclosed in the illustrated embodiment, other arrangements will benefit herefrom. Although particular step sequences are shown, described, and claimed, it should be understood that steps may be performed in any order, separated or combined unless otherwise indicated and will still benefit from the present invention.

Although the different examples have specific components shown in the illustrations, embodiments of this invention are not limited to those particular combinations. It is possible to use some of the components or features from one of the examples in combination with features or components from another one of the examples.

Although an example embodiment has been disclosed, a worker of ordinary skill in this art would recognize that certain modifications would come within the scope of the claims. For that reason, the following claims should be studied to determine their true scope and content.

## Claims

1. A stator vane (63) for a gas turbine engine comprising:
an airfoil (68) having an exterior wall (82) providing a cooling cavity (84), the exterior wall having an interior surface (98) having multiple pin fins (96) extending therefrom; and
a baffle (72) arranged in the cooling cavity (84) and supported by the pin fins (96).

2. The stator vane according to claim 1, wherein the baffle (72) is sheet steel.

3. The stator vane according to claim 1 or 2, wherein the exterior wall (82) provides pressure and suction sides (78,80) joined at leading and trailing edges (74,76), and the baffle (72) includes impingement holes (94) configured to provide impingement cooling fluid onto the exterior wall (82) at the leading edge (74).

4. The stator vane according to any preceding claim, wherein the baffle includes a generally smooth outer contour free of protrusions, the outer contour optionally being provided by plastic deformation, and/or wherein, optionally, cooling holes are provided by at least one of drilling, laser drilling, or electro discharge machining.

5. The stator vane according to any preceding claim, wherein a perimeter cavity (86) is provided between the baffle (72) and the exterior wall (82), the pin fins (96) being arranged in the perimeter cavity (86).

6. The stator vane according to claim 5, wherein the perimeter cavity (86) circumscribes the baffle (72).

7. The stator vane according to claim 5 or 6, wherein the pin fins (96) provide the sole support for the baffle (72) in the perimeter cavity (86).

8. The stator vane according to any preceding claim, wherein the pin fins (96) are arranged in rows.

9. The stator vane according to any preceding claim, wherein the pin fins (96) are radially spaced from one another.

10. The stator vane according to any preceding claim, wherein a rib (90) separates the cooling cavity (86) from a trailing edge cooling cavity (88), wherein the rib (90) includes holes (91).

11. The stator vane according to any preceding claim, wherein the pin fins (96) are integral with the exterior wall.

12. The stator vane according to any preceding claim, wherein the airfoil (68) is a nickel alloy.

13. The stator vane according to any preceding claim, wherein the pin fins (96) are arranged in a region with a low Reynolds number, for example less than 4000, for example less than 1500.

14. The stator vane according to claim 13, wherein the region has a Nusselt number less than 40.

15. An assembly for a gas turbine engine comprising:
an airfoil (68) having an exterior wall (82) providing a cooling cavity (84), the exterior wall (82) having an interior surface (98) having multiple pin fins (96) extending therefrom;
a baffle (72) arranged in the cooling cavity (84) and supported by the pin fins (96), wherein the pin fins (96) are arranged in a region with a low Reynolds number;
a cooling source in fluid communication with one side of the baffle (72); and
a component in fluid communication with another side of the baffle (72), cooling fluid configured to flow from the cooling source through the baffle (72) to the component, wherein, optionally, the component is a downstream airfoil.
